Europäisches Patentamt

European Patent Office

Office européen des brevets

(19)

(11) Veröffentlichungsnummer: **0 068 348**
**B1**

(12)

# EUROPÄISCHE PATENTSCHRIFT

(45) Veröffentlichungstag der Patentschrift:
**08.10.86**

(21) Anmeldenummer: **82105344.4**

(22) Anmeldetag: **18.06.82**

(51) Int. Cl.⁴: **C 01 B 33/32**

(54) **Verfahren zur Herstellung von festem, kristallinem, wasserfreiem Natriummetasilikat.**

(30) Priorität: **25.06.81 DE 3124893**

(43) Veröffentlichungstag der Anmeldung:
**05.01.83 Patentblatt 83/1**

(45) Bekanntmachung des Hinweises auf die Patenterteilung:
**08.10.86 Patentblatt 86/41**

(84) Benannte Vertragsstaaten:
**AT CH DE FR GB IT LI NL**

(56) Entgegenhaltungen:
**FR - A - 868 962**
**US - A - 2 830 876**
**US - A - 3 367 739**
**US - A - 3 532 458**

(73) Patentinhaber: **Henkel Kommanditgesellschaft auf Aktien, Postfach 1100 Henkelstrasse 67, D-4000 Düsseldorf-Holthausen (DE)**

(72) Erfinder: **Just, Günther, Verdistrasse 48, D-4010 Hilden (DE)**

EP 0 068 348 B1

**Beschreibung**

Es ist allgemein bekannt, wasserfreies Natriummetasilikat durch Zusammenschmelzen oder Zusammensintern von Soda und Sand herzustellen. Das so erhaltene Produkt muss anschliessend zermahlen werden und enthält dann unvermeidlich erhebliche Mengen an Staub. Auch treten in der Praxis erhebliche Schwierigkeiten auf, wenn man versucht, aus Lösungen von Natriummetasilikat durch Verdampfen von Wasser ein kristallisiertes Produkt zu erhalten. Die Wärmeaustauscherflächen werden nämlich nach kurzer Zeit mit einem harten Überzug von wasserfreiem Natriummetasilikat überzogen, der eine ökonomische Wärmeübertragung verhindert. Wegen der erforderlichen hohen Temperaturen treten ebenfalls gewisse Schwierigkeiten auf, wenn man durch Versprühen von Natriummetasilikatlösungen zu wasserfreien Produkten gelangen will. Insbesondere enthalten die sprühgetrockneten Produkte erhebliche Mengen an Staub.

Zur Vermeidung der vorstehend aufgezeigten Nachteile hat man gemäss der DE-B-1 567 572 vorgeschlagen, wasserfreie, kristalline Alkalisilikate, vorzugsweise Natriummetasilikat, dadurch herzustellen, dass man auf feinverteiltem festem Alkalisilikat, welches auf eine Temperatur von über 130 °C erhitzt ist und dauernd in Bewegung gehalten wird, durch Aufsprühen einer wässrigen Alkalisilikatlösung einen Film erzeugt und durch einen zusätzlichen heissen Gasstrom die Verdampfung des Wassers bewirkt, wobei der Überzugs- und Trocknungsschritt so lange wiederholt wird, bis die Grösse der kristallinen, wasserfreien Alkalisilikatteilchen in gewünschtem Masse angestiegen ist. Im allgemeinen führt man hierbei einen Teil des anfallenden weitgehend wasserfreien Alkalisilikats dem kontinuierlichen Prozess als Ausgangskomponente wieder zu.

Gemäss der DE-B-2 100 544 wird wasserfreies Natriummetasilikat dadurch hergestellt, dass man eine 40- bis 60gewichtsprozentige Natriummetasilikatlösung über Düsen in eine dichte Wirbelschicht hineinstrahlt, in der Natriummetasilikatkörnchen auf einer Temperatur zwischen 125 und 350 °C gehalten werden, wobei die Wirbelschicht durch einen aufsteigenden erhitzten Luftstrom erzeugt wird, dessen Geschwindigkeit zwischen 22,9 und 61 m/Minute liegt.

Die Nachteile dieser bekannten Verfahren sind, dass man in dem ständig in Bewegung gehaltenen Natriummetasilikat beziehungsweise im Wirbelbett eine grosse Anzahl von Natriummetasilikatkörnchen als Impfgrundlage braucht und dass somit ein sehr grosser Anteil des gewonnenen Sprühgranulates wieder gemahlen und in das Wirbelbett zurückgeführt werden muss, so dass letzten Endes die Ausbeute dieser Verfahren gering ist.

Aus der DE-C-968 034 ist es ferner bekannt, festes kristallwasserhaltiges Natriummetasilikat dadurch herzustellen, dass man feinverteilte Kieselsäure, wie Quarzsand oder Quarzmehl, und wässrige Natronlauge in einem Verhältnis, welchem dem Verhältnis Alkalioxid:$SiO_2$ in dem herzustellenden Produkt etwa entspricht, homogen mischt, das Gemisch kontinuierlich in ein Reaktionsrohr gegen den in diesem herrschenden Druck einfördert und es bei Temperaturen oberhalb etwa 175 °C mit der Massgabe durch das Reaktionsrohr führt, dass eine gleichmässige Verteilung der Kieselsäure in dem Gemisch durch Regulierung der linearen Strömungsgeschwindigkeit gewährleistet ist. Anschliessend lässt man das heisse Reaktionsprodukt aus dem Reaktionsrohr durch ein Entspannungsventil austreten, wobei der ursprünglich höhere Wassergehalt des gebildeten Reaktionsproduktes infolge der bei der Entspannung eintretenden Wasserverdampfung auf den gewünschten Wassergehalt des Endproduktes herabgesetzt wird. In dieser Weise ist es möglich, Natriummetasilikat-Hydrate mit weniger als 9 Mol Kristallwasser herzustellen.

Aus der EP-A-0 001 368 ist es weiterhin bekannt, ein 2- bis 6 Gewichtsprozent Wasser enthaltendes Metasilikat dadurch herzustellen, dass eine wässrige Metasilikatlösung in eine pulvrige, gerührte Masse eines wasserfreien Metasilikats eingesprüht wird, wobei dieses Mischzone mittels heisser Gase derart erhitzt wird, dass dem sich bildenden Granulat ein ausreichender Zusammenhalt gegeben und ferner im Granulat etwa 1 bis 8% Wasser belassen werden. Anschliessend setzt man das so erhaltene Granulat einer Wärmebehandlung in einem Rührbehälter aus, um so eine zumindest teilweise Umwandlung in Metasilikat-Pentahydrat zu erreichen.

Aus der NL-A-7 802 697 ist es ferner bekannt, Natriumsilikatlösungen herzustellen, in dem man Sand mit Natronlauge bei erhöhtem Druck und bei einer Temperatur von wenigstens 200 °C durch ein Rohr führt, welches zum kontinuierlichen Aufschluss von Bauxit Verwendung finden kann und zum Beispiel aus der DE-A-2 106 198 sowie 2 514 339 bekannt ist. Zur Herstellung von Metasilikatprodukten arbeitet man vorzugsweise bei einer Temperatur von 200 bis 240 °C; für die Herstellung von Produkten mit einem höheren Verhältnis von $SiO_2$:$Na_2O$ verwendet man vorzugsweise Temperaturen von 240 bis 280 °C. Der Druck im Rohr liegt vorzugsweise im Bereich zwischen 10 000 und 20 000 kPa. Gemäss dem in dieser Offenlegungsschrift beschriebenen Verfahren werden jedoch nur Lösungen und keine festen Produkte hergestellt.

Aus dem französischen Patent 868 962 ist ein Verfahren zur Herstellung von Natriummetasilikat bekannt, bei dem man Quarzpulver oder Quarzsand bei Temperaturen von vorzugsweise 160 bis 200 °C mit einem beträchtlichen Überschuss an Natronlauge einer Konzentration von vorzugsweise über 65% aufschliesst und das Metasilikat aus der so erhaltenen Lösung – nach Verdünnen mit Wasser – kristallisieren lässt. Nach Abtrennen des gebildeten Natriummetasilikats wird die Mutterlauge aufkonzentriert und in das Verfahren zurückgeführt. Das gebildete Natriummetasilikat weist die folgende Zusammensetzung auf: 44 bis 45% $SiO_2$ und 51 bis 53% $Na_2O$. Aufgrund der

hohen Überschüsse an Natronlauge – 3,5- bis 4fach molar – und der Reaktionszeiten von mehreren Stunden ist die Durchführung dieses Verfahrens jedoch nicht wirtschaftlich. Zudem enthält auch das gebildete Produkt noch einen Alkali-Überschuss.

Demgegenüber ist es die Aufgabe der vorliegenden Erfindung, ein Verfahren zur Herstellung von festem, wasserfreiem Natriummetasilikat in einer ausgeprägten kristallinen Form zu entwikkeln, bei dem die vorstehend aufgezeigten Nachteile nicht auftreten.

Gegenstand der vorliegenden Erfindung ist somit ein Verfahren zur Herstellung von festem, kristallinem, wasserfreiem Natriummetasilikat, bei welchem man ein $SiO_2$-haltiges Material mit konzentrierter wässriger Natronlauge unter erhöhtem Druck und einer Temperatur im Bereich von 200 bis 400 °C aufschliesst, das gebildete Natriummetasilikat abfiltriert und die verbleibende Mutterlauge nach Aufkonzentrieren in das Verfahren zurückführt, dadurch gekennzeichnet, dass man

a) die Reaktionskomponenten in einem molaren Verhältnis von $SiO_2:Na_2O$ im Bereich von 1,2:1 bis 1:1,2 in die Aufschlussreaktion einsetzt,

b) die bei der Aufschlussreaktion anfallende Suspension auf eine Temperatur im Bereich von 70 bis 130 °C abkühlt und filtriert,

c) die bei der Filtration anfallende Mutterlauge aufkonzentriert und unter Einhaltung einer Temperatur von oberhalb 80 °C entweder mit den Reaktionskomponenten oder mit der Suspension, vor deren Abkühlen, vermischt,

d) den erhaltenen Filterrückstand bei erhöhter Temperatur zerkleinert und anschliessend trocknet.

Überraschenderweise hat sich nämlich gezeigt, dass es das erfindungsgemässe Verfahren ermöglicht, aus der aufkonzentrierten Mutterlauge – von der bislang nur bekannt war, dass sich hieraus festes Natriummetasilikat nur mit erheblichem technischem Aufwand gewinnen lässt – in dieser gelöstes und nicht zum Kristallisieren neigendes Natriummetasilikat in kristalliner Form zu gewinnen und überdies das Kristallwachstum des Natriummetasilikats in optimaler Weise zu beeinflussen.

Das Rückführen der aufkonzentrierten Mutterlauge zum Aufschlussreaktionsgemisch lässt sich in unterschiedlicher Weise durchführen. Es ist z.B. möglich, die aufkonzentrierte Mutterlauge entweder mit einer oder mehreren der Reaktionskomponenten vor dem Aufschluss zu mischen und so dem Aufschlussreaktor zuzuführen oder aber die Mutterlauge direkt dem Aufschlussreaktor zuzuführen oder auch die Mutterlauge erst der beim Aufschluss erhaltenen Suspension zuzumischen.

Ferner kann man die aufkonzentrierte Mutterlauge in zwei oder mehrere Anteile aufteilen und diese Anteile jeweils an der einen oder anderen Stelle in den Aufschlussreaktor zurückführen oder gewünschtenfalls auch nur teilweise in den Kreislauf einbringen.

Sowohl das Rückführen der Mutterlauge zu dem Aufschlussreaktor als auch das Rückführen zu der erhaltenen Aufschlusssuspension bedingen ein Kristallisieren des Natriummetasilikats. Es hat sich gezeigt, dass diese Kristallisation temperatur- und zeitabhängig ist. In einer für die Praxis geeigneten Zeitspanne bildet sich unterhalb etwa 80 °C vergleichsweise wenig Kristallisat aus der Mutterlauge; bei etwa 120 bis 130 °C – bei welcher Temperatur die aufkonzentrierte Mutterlauge unter atmosphärischem Druck siedet – fällt etwa 10% als Kristallisat aus, wohingegen bei 150 °C und höheren Temperaturen eine sehr gute Ausbeute an kristallisiertem Material erhalten wird. Demzufolge ist es im Sinne der Erfindung bevorzugt, die aufkonzentrierte Mutterlauge mit den Aufschlusskomponenten bzw. mit der Aufschlusssuspension bei Temperaturen oberhalb 150 °C unter einem entsprechenden Druck, bei dem das Gesamtgemisch flüssig bleibt, zu vermischen.

Auch bei niedrigen Temperaturen lässt sich die Ausbeute an Kristallisat verbessern, wenn man längere Verweilzeiten in Kauf nimmt. Längere Verweilzeiten sind jedoch für die grosstechnische Durchführung des erfindungsgemässen Verfahrens im allgemeinen wenig geeignet und daher in der Regel unerwünscht.

Durch entsprechende Vorversuche lässt sich leicht ermitteln, unter welchen Bedingungen sich im speziellen Falle das erfindungsgemässe Verfahren – im Rahmen des vorstehend Gesagten – am besten durchführen lässt bzw. das Kristallwachstum des Natriummetasilikats optimiert werden kann.

Es sei noch bemerkt, dass im Sinne der vorliegenden Erfindung unter «wasserfreiem Natriummetasilikat» ein Natriummetasilikat verstanden wird, welches im allgemeinen durchschnittlich nicht mehr als 5 Gewichtsprozent Wasser und vorzugsweise bis zu 3 Gewichtsprozent Wasser enthält.

Das erfindungsgemässe Verfahren lässt sich sowohl diskontinuierlich als auch kontinuierlich durchführen.

Für das erfindungsgemässe Verfahren verwendet man als $SiO_2$-haltiges Material vorzugsweise Quarzsand und/oder Quarzmehl mit einer entsprechenden Teilchengrösse.

Im allgemeinen liegt diese Teilchengrösse zwischen etwa 0,1 und 0,8 mm. Bei der diskontinuierlichen Durchführung des Verfahrens mit vergleichsweise langen Aufheiz-, Reaktions- und Abkühlzeiten kann beispielsweise ein Quarzsand mit einer Körnung 0,4 bis 0,8 mm von etwa 23%, 0,2 bis 0,4 mm von etwa 73% und 0,1 bis 0,2 mm von etwa 4% eingesetzt werden. Bei der kontinuierlichen Durchführung des Verfahrens empfiehlt sich eine feinere Körnung des Quarzsandes oder Quarzmehls von vorzugsweise nicht über 0,3 mm.

Die zum Aufschluss eingesetzte Natronlauge hat im allgemeinen eine Konzentration von 40 bis 60 Gewichtsprozent, vorzugsweise eine Konzentration von etwa 50 Gewichtsprozent Natriumhydroxid.

Die Aufschlussbehandlung wird bei einer Temperatur im Bereich von etwa 200 bis 400 °C, vorzugsweise im Bereich von 240 bis 300 °C durchgeführt. Der erforderliche Druck kann bei der Aufschlussbehandlung beispielsweise dadurch erzielt werden, dass man den Aufschluss in einem Druckgefäss durchführt bzw. bei kontinuierlicher Durchführung des Verfahrens in einem Druckrohr arbeitet, wobei durch entsprechende Pumpen und Ventile der gewünschte Druck aufgebaut und beibehalten wird. Für die Durchführung des erfindungsgemässen Verfahrens eignet sich beispielsweise die Vorrichtung, die in der deutschen Offenlegungsschrift 2 106 198 für den kontinuierlichen Aufschluss von Bauxit beschrieben ist.

Bei der diskontinuierlichen Durchführung des erfindungsgemässen Verfahrens wird im allgemeinen die aufkonzentrierte Mutterlauge der bei dem Aufschluss anfallenden Suspension zugemischt. Dabei ist vorzugsweise eine Temperatur von oberhalb 150 °C einzuhalten. Diese Temperatur lässt sich in der Regel bereits durch das Vermischen der Mutterlauge mit der im Aufschlussreaktor befindlichen Suspension erreichen.

Die nach der Zugabe der Mutterlauge – entweder zum Aufschlussreaktor oder zu der Aufschlusssuspension – erhaltene Suspension wird anschliessend auf eine Temperatur im Bereich von 70 bis 130 °C, vorzugsweise auf 90 bis 105 °C, abgekühlt und enthält dann etwa 40 bis 50% der Gesamtmenge an Silikat in Form einer feinteiligen kristallinen Ausfällung. Diese Ausfällung lässt sich vergleichsweise gut filtrieren und fällt dabei in Form einer verfilzten zusammenhängenden Schicht an, die einen Wassergehalt zwischen etwa 5 und 20%, berechnet als $H_2O$ und bezogen auf das Gesamtgewicht des Filterkuchens, aufweist.

Die Filtration wird vorzugsweise als Druckfiltration bei der angegebenen Temperatur zwischen 70 und 130 °C, vorzugsweise bei 90 bis 105 °C, durchgeführt. Jedoch sind auch andere Filtrationsmethoden bei der Durchführung des erfindungsgemässen Verfahrens verwendbar.

Der Filterkuchen ist bei einer Temperatur im Bereich von 70 bis 90 °C weich und formbar und lässt sich so beispielsweise in einem Extruder zu einem Granulat gewünschten Durchmessers, zum Beispiel von etwa 1 mm, formen und bei nur geringer Agglomerat- und Feinstaubbildung im Wirbelbett oder in bewegten Kontakttrocknern bis zu Wassergehalten unterhalb von 3 Gewichtsprozent trocknen. Von dem getrockneten Produkt kann gewünschtenfalls der zu grobe Anteil weiter gemahlen und dem Rest des getrockneten Produktes wieder zugeführt werden, wonach das gesamte Produkt gegebenenfalls gesiebt werden kann.

Im Sinne der Erfindung ist es bevorzugt, dass man den Filterrückstand bei einer Temperatur im Bereich von 70 bis 90 °C zerkleinert.

Das bei der Filtration anfallende Filtrat kann kostengünstig und energiesparend in einer mehrstufigen Eindampfanlage auf die Konzentration eingedampft werden, die den ursprünglichen Ansatzverhältnissen entspricht. Die so erhaltene aufkonzentrierte Mutterlauge fällt dabei in Form einer viskosen Lösung an, aus der sich bei diesen hohen Temperaturen praktisch keine Feststoffe abscheiden. Diese aufkonzentrierte Mutterlauge kann, wie vorstehend geschildert, im Kreislauf in das Verfahren zurückgeführt werden.

Bei dem erfindungsgemäss hergestellten Natriummetasilikat handelt es sich nach Röntgenbeugungs- und Elektronenrasteraufnahmen um hochkristalline Produkte, die Kristallite mit einer mittleren Länge von etwa 5 bis 10 µm und einem mittleren Durchmesser von etwa 1 bis 3 µm enthalten. Der Wassergehalt des Natriummetasilikats liegt im allgemeinen durchschnittlich unter 5 Gewichtsprozent.

Die nachfolgenden Beispiele erläutern die Erfindung, ohne sie in irgendwelcher Weise zu beschränken.

### Beispiel 1

489 kg Quarzsand – mit folgendem Kornspektrum: etwa 23% mit 0,4 bis 0,8 mm, etwa 73% mit 0,2 bis 0,4 mm, etwa 4% mit 0,1 bis 0,2 mm – wurden mit einer 50gewichtsprozentigen Natronlauge im molaren Verhältnis $SiO_2 : Na_2O$ von 1:1 in einem rotierenden Druckgefäss bei 250 °C während einer Stunde aufgeschlossen. Nach Ablauf der Reaktionszeit wurde dem unter Druck (30–40 bar) stehenden Umsetzungsprodukt 2204 kg aufkonzentrierte Mutterlauge aus einem früheren Ansatz mit einer Temperatur von etwa 100 °C zugefügt. Anschliessend wurde die so erhaltene Suspension weiter auf 100 °C abgekühlt und auf einem Druckfilter filtriert. Es resultierten 2820 kg Filtrat und 1180 kg Filterkuchen. Der Filterkuchen wurde bei einer Temperatur von etwa 80 °C in einem Extruder zu einem Granulat mit einem Durchmesser von 1 mm geformt und anschliessend in einem Wirbelbett getrocknet, wobei 180 kg Wasser abgeführt wurden. Das erhaltene Produkt wurde anschliessend gesiebt; es fielen 1000 kg kristallines Natriummetasilikat mit einem Wassergehalt unter 1 Gewichtsprozent an.

Das bei der Filtration erhaltene Filtrat wurde in einer mehrstufigen Eindampfanlage eingedampft, wobei 616 kg Wasser und 2204 kg aufkonzentrierte Mutterlauge erhalten wurden. Die aufkonzentrierte Mutterlauge enthielt 1198,5 kg Natriummetasilikat; sie wurde einer neuen Aufschlusssuspension wieder zugesetzt.

### Beispiel 2

Dieses Beispiel erläutert die kontinuierliche Durchführung des erfindungsgemässen Verfahrens.

Aus einem mit Rührer versehenen Ansatzkessel, in dem Quarzsand mit einer Körnung unterhalb 0,3 mm und 50gewichtsprozentige Natronlauge – im Molverhältnis $SiO_2 : Na_2O = 1:1$ – sowie in Kreislauf geführte aufkonzentrierte Mutterlauge vorlagen, wurde das Gemisch mit einer Kolbenmembranpumpe in einen unter einem Druck von 60 bis 70 bar stehenden Rohrreaktor gefördert und unter Ausnutzung abzukühlender Umsetzungsprodukte im weitgehenden Wärmeaustausch auf 270 bis 280 °C aufgeheizt, 10 bis 15 Minuten auf dieser Temperatur gehalten und anschliessend abgekühlt und entspannt. Die Filtration der so anfallenden Suspension sowie die weitere Verarbeitung des Filterkuchens und der Mutterlauge erfolgten entsprechend den Angaben in Beispiel 1.

**Patentansprüche**

1) Verfahren zur Herstellung von festem, kristallinem, wasserfreiem Natriummetasilikat, bei welchem man ein $SiO_2$-haltiges Material mit konzentrierter wässriger Natronlauge unter erhöhtem Druck und einer Temperatur im Bereich von 200 bis 400 °C aufschliesst, das gebildete Natriummetasilikat abfiltriert und die verbleibende Mutterlauge nach Aufkonzentrieren in das Verfahren zurückführt, dadurch gekennzeichnet, dass man

a) die Reaktionskomponenten in einem molaren Verhältnis von $SiO_2 : Na_2O$ im Bereich von 1,2:1 bis 1:1,2 in die Aufschlussreaktion einsetzt,

b) die bei der Aufschlussreaktion anfallende Suspension auf eine Temperatur im Bereich von 70 bis 130 °C abkühlt und filtriert,

c) die bei der Filtration anfallende Mutterlauge aufkonzentriert und unter Einhaltung einer Temperatur von oberhalb 80 °C entweder mit den Reaktionskomponenten oder mit der Suspension, vor deren Abkühlen, vermischt,

d) den erhaltenen Filterrückstand bei erhöhter Temperatur zerkleinert und anschliessend trocknet.

2) Verfahren nach Anspruch 1, dadurch gekennzeichnet, dass man die Aufschlussbehandlung bei einer Temperatur im Bereich von 240 bis 300 °C durchführt.

3) Verfahren nach Anspruch 1 und 2, dadurch gekennzeichnet, dass man die Suspension auf eine Temperatur im Bereich von 90 bis 105 °C abkühlt und filtriert.

4) Verfahren nach Anspruch 1 und 2, dadurch gekennzeichnet, dass man die aufkonzentrierte Mutterlauge unter Einhaltung einer Temperatur von oberhalb 150 °C mit den Reaktionskomponenten oder der Suspension vermischt.

5) Verfahren nach Anspruch 1 bis 4, dadurch gekennzeichnet, dass man den Filterrückstand bei einer Temperatur im Bereich von 70 bis 90 °C zerkleinert.

**Claims**

1. A process for the production of solid, crystalline anhydrous sodium metasilicate in which an $SiO_2$-containing material is fused with concentrated aqueous sodium hydroxide under elevated pressure and at a temperature of from 200 to 400 °C, the sodium metasilicate formed is filtered off and the residual mother liquor is recycled to the process after concentration, characterized in that

a) the reaction components are introduced into the fusion reaction in a molar ratio of $SiO_2$ to $Na_2O$ of from 1.2:1 to 1:1.2,

b) the suspension accumulating during the fusion reaction is cooled to a temperature of from 70 to 130 °C and filtered,

c) the mother liquor accumulating during filtration is concentrated and is mixed either with the reaction components or with the suspension before cooling at a temperature kept above 80 °C,

d) the filter residue obtained is size-reduced at elevated temperature and then dried.

2. A process as claimed in Claim 1, characterized in that the fusion treatment is carried out at a temperature of from 240 to 300 °C.

3. A process as claimed in Claims 1 and 2, characterized in that the suspension is cooled to a temperature of from 90 to 105 °C and filtered.

4. A process as claimed in Claims 1 and 2, characterized in that the concentrated mother liquor is mixed with the reaction components or with the suspension at a temperature kept above 150 °C.

5. A process as claimed in Claims 1 to 4, characterized in that the filter residue is size-reduced at a temperature of from 70 to 90 °C.

**Revendications**

1) Procédé pour la fabrication de métasilicate de sodium anhydre, solide, cristallin, dans lequel on dissout une matière contenant $SiO_2$, avec une lessive de soude caustique concentrée, sous une pression élevée et à une température de 200 à 400 °C, reprend par filtration le métasilicate de sodium formé, et recycle la liqueur-mère restante, après concentration, dans le cours de l'opération, caractérisé en ce que l'on:

a) met en œuvre les composants réactifs dans un rapport molaire $SiO_2 : Na_2O$ de l'ordre de 1,2:1 à 1:1,2 dans la réaction de dissolution,

b) refroidit la suspension sortant de la réaction de dissolution à une température de l'ordre de 70 à 130 °C et filtre,

c) concentre la liqueur-mère provenant de la filtration et la mélange, avant qu'elle ne soit refroidie et en maintenant la température au-dessous de 80 °C, soit avec les composants de la réaction, soit avec la suspension,

d) broie le résidu, obtenu sur le filtre, à température élevée et le sèche ensuite.

2) Procédé suivant la revendication 1, caractérisé en ce que l'opération de dissolution est effectuée à une température de l'ordre de 240 à 300 °C.

3) Procédé suivant les revendications 1 et 2, caractérisé en ce que la suspension est refroidie à une température de l'ordre de 90 à 105 °C, et filtre.

4) Procédé suivant les revendications 1 et 2, caractérisé en ce que la liqueur-mère concentrée est mélangée, en maintenant une température supérieure à 150 °C, avec les composants de la réaction ou la suspension.

5) Procédé suivant les revendications 1 à 4, caractérisé en ce que le résidu de la filtration est broyé à une température de l'ordre de 70 à 90 °C.